# EUROPEAN PATENT SPECIFICATION

(11) **EP 1 642 105 B1**
(45) Date of publication and mention of the grant of the patent: **06.03.2013**
(21) Application number: 04748657.6
(22) Date of filing: 14.06.2004
(51) Int. Cl.: B62M 6/40, G01L 3/14, G01L 1/22, G01L 5/00, B62M 9/00

(54) **TRANSMISSION SYSTEM, AND METHOD FOR MEASURING A DRIVE FORCE THEREIN**
ÜBERTRAGUNGSSYSTEM UND VERFAHREN ZUR MESSUNG EINER ANTRIEBSKRAFT DARIN
SYSTEME DE TRANSMISSION ET PROCEDE DE MESURE DE FORCE D'ENTRAINEMENT

(30) Priority: 17.06.2003 NL 1023681; 27.06.2003 NL 1023765
(43) Date of publication of application: 05.04.2006
(73) Proprietor: Spinpower B.V., 2517 GP Den Haag (NL)
(72) Inventor: ROOVERS, Gijsbertus, Franciscus, Cornelis, NL-5052 BA Goirle (NL); D'HERRIPON, Bastiaan, Andreas, NL-5051 NN Goirle (NL)
(74) Representative: Griebling, Onno
(86) International application number: PCT/NL2004/000425
(87) International publication number: WO 2004/111591

(56) References cited:
- WO-A-01/30643
- WO-A-99/29564
- GB-A- 2 312 193
- US-A- 3 824 846
- US-A- 4 899 599
- US-A- 4 909 086
- PATENT ABSTRACTS OF JAPAN vol. 1998, no. 11, 30 September 1998 (1998-09-30) -& JP 10 176967 A (HAMANA BUHIN KOGYO KK;SUZUKI MOTOR CORP), 30 June 1998 (1998-06-30)
- PATENT ABSTRACTS OF JAPAN vol. 1999, no. 01, 29 January 1999 (1999-01-29) -& JP 10 274575 A (AICHI STEEL WORKS LTD), 13 October 1998 (1998-10-13)

## Description

The present invention relates in general to a transmission system of the span type. Such a system comprises two rotatable parts, which are jointly spanned by an endless transmission member closed in itself. This transmission member can e.g. be implemented as string, belt or chain, and the rotatable parts are accordingly implemented as discs, drums, pulleys, or chain wheels or the like. In the case of strings or belts, the transmission system exists as one piece; in the case of a chain, the transmission system exists as a system of links coupled to each other. Coupling between the transmission member and the rotatable parts can be based on friction, but also a form-coupling can be applied, wherein e.g. sprockets of a chain wheel engage in holes in the transmission member.

The present invention is particularly applicable to a chain transmission, wherein a chain couples two chain wheels. Therefore, simply the phrases "coupling chain", or in short "chain", and "chain wheel" will hereinafter be used. These phrases are however not used to limit the invention to this type, but are used here as phrases also including the embodiment as belt or string and corresponding pulleys or the like.

The present invention is particularly applicable to a chain transmission in a bicycle or another vehicle driven by human power, and to a chain transmission in a home trainer or the like. In such applications, but also in industrial force transmissions, there is a need for a measuring instrument for measuring the transmitted torque. A measure for that is the tension being present in the chain. Several measuring instruments based on measuring the force exerted on the driven wheel have already been described. Such measuring instruments presume however, that there is no bias tension in the chain, i.e. no force is exerted on the driven wheel if the driving wheel is not being driven itself. However, in situations where the chain in rest is also -strongly tight ened, in both chain halves the same tension is present, and the driven wheel experiences a force which equals the sum of those tensions, while in fact the drive torque equals zero.

Only when the driving wheel is driven, e.g. by the pedal force of a cyclist, the tension in one chain half becomes higher than the tension in the other chain half, whereby the driven wheel experiences a resulting drive torque which is substantially equal to the difference between the two tensions in the two chain halves, multiplied by the diameter of the driven wheel.

Furthermore, it has appeared in the case of bicycles that the chain wheels can have a certain eccentricity, whereby variations in the bias tension occur during use, which influence the measurement results of known measuring instruments. This occurs especially in applications where the chain is tightened strongly in order to absorb shocks by changes in the coupling direction, and in friction transmissions where a bias tension is necessary because of the required friction force.

The present invention therefore aims at providing a torque measuring instrument which is substantially insensitive to the magnitude of the bias tension in the chain.

More particularly, the present invention aims at providing a measuring instrument which is capable of measuring the tension difference. Such a measuring instrument will hereinafter be referred to as tension difference measuring device.

A tension difference measuring device has already been described in US-4.909.086. The tension difference measuring device known from this publication comprises two freely rotating pulleys, arranged on the outer side of the chain and rotatably mounted on a common support. The mutual distance between those pulleys is smaller than the nominal distance between the chain halves, so that each chain half is forced to follow a part of the periphery of the corresponding pulley. As a result of the tension present in a chain half, this chain half exerts on the corresponding pulley an outwards directed force resultant; that force will hereinafter be referred to as transverse force. When the chain exerts a drive force and the tension increases in one chain half and decreases in the other chain half, the transverse force exerted on the corresponding pulley by the one chain half will increase and the transverse force exerted on the corresponding pulley by the other chain half will decrease, whereby the whole of the two pulleys and the common support is displaced in the direction of the transverse force exerted by the first chain half. The magnitude of the resulting displacement is a measure for the magnitude of the force exerted.

This known tension difference measuring device has some disadvantages. The number of components is fairly large, which makes the measuring device relatively expensive. Because the pulleys are placed at the outer side of the chain, their diameter must be fairly small, because otherwise the whole would take too much space; this drawback is particularly valid for a bicycle or a home trainer. Because of the small pulley diameter, the chain at the location of the pulleys is forced into a shape with a small curvature radius, which can lead to increased wear. Furthermore, the small pulley diameters imply that the pulleys rotate with a fairly high velocity, which is also a wear factor and is moreover accompanied with a fairly high sound production.

Moreover, each pulley is subjected to a fairly large force with respect to the support, namely the full transverse force, so that the pulley bearing of each pulley must be able to withstand this large transverse force, and is therefore relatively expensive. Moreover, the friction forces occurring are fairly large, whereby on one hand the performance of the transmission decreases, and whereby on the other hand a disturbing force is exerted on the sensor whereby the measurement accuracy decreases.

In the case of bicycles and home trainers, the two chain wheels usually have mutually different diameters, so that the two chain halves are not mutually parallel. Because of this, the two transverse forces are not in line, with the result that the resultant of the two transverse forces exerts a net moment to the pulley support, which influences the measurement signal.

The present invention aims to provide a tension difference measuring device wherein the said disadvantages are absent or at least strongly reduced.

According to an important aspect of the present invention, a tension difference measuring device comprises a transverse force sensor located inside the chain, the transverse force sensor being at least partly spanned by both chain halves, and the tension difference measuring device is further provided with means for measuring the transverse force exerted on the sensor. In an important embodiment, this transverse force sensor is a wheel rotatably mounted with respect to a support, which rotates along with the moving chain.

In a first embodiment variation, the transverse force sensor is a separate measuring wheel, which is placed in the chain plane within the span of the chain. The diameter has been chosen to be so large that each chain half is forced to follow a part of the periphery of the measuring wheel. In this case, the curvature radius of the chain is relatively large. The measuring wheel rotates with a relatively low velocity. The measuring wheel is mounted on a supporting arm, which in turn is fixedly attached with respect to the frame in which the driving wheel and the driven wheel are mounted (the bicycle frame). Providing an electric measurement signal which is representative for the displacement of the support can take place by measuring the deformation of this supporting arm, e.g. by means of strain gauges or by measuring the displacement of this supporting arm, e.g. by means of a laser.

In a second embodiment variation, the transverse force sensor is the chain-driven wheel itself. The means for measuring the transverse force exerted on the driven wheel in this case comprise a sensor for measuring the force exerted in a direction perpendicular to the wheel axle. Such sensors are known per se. A certain type of such sensors is based on measuring the bending of the wheel axle, like for instance described in WO01/30643 and PCT/NL02/00867. In this publication, this force sensor is intended for measuring the chain force, and is therefore mounted in such a way that its sensitivity direction is substantially horizontal, namely substantially directed parallel to the chain. This same sensor can be used as sensor for application with the present invention if this is rotated over 90°, and is thus mounted in such a way that its sensitivity direction is substantially vertical, namely substantially directed perpendicular to the chain.

These and other aspects, features and advantages of the present invention will be further explained by the following description with reference to the drawings, in which same reference numbers indicate same or similar parts, and in which:
figure 1 is a side view schematically showing a transmission system, in a state of rest, provided with a transverse force sensor mounted on a supporting arm, wherein the supporting arm is directly attached to a frame;
figure 2 schematically shows the transmission system of figure 1, in an active state in which a drive force is exerted; figure 3 schematically shows a variation of a transverse force sensor;
figure 4A is a schematic side view of a part of the transmission system of figure 1, with a vertical supporting arm for the transverse force sensor;
figure 4B is a schematic front view of a part of the transmission system of figure 1, with a horizontal supporting arm for the transverse force sensor, perpendicular to the plane of the chain;
figure 5 is a schematic side view of the transmission system comparable to figure 1, wherein as variation the supporting arm of the transverse force sensor is attached to the axle of the driven wheel;
figure 6 is a schematic side view of the transmission system comparable to figure 1, wherein as variation the axle of the driven wheel is used as transverse force sensor;
the figures 7A and 7B show details of a supporting arm for the transverse force sensor.

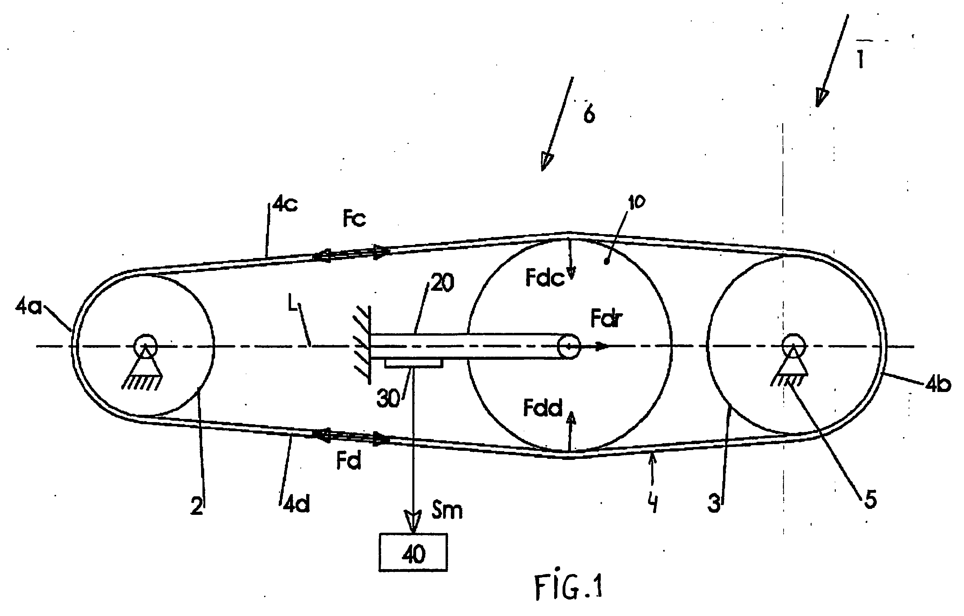

Figure 1 schematically shows a transmission system 1, comprising a drive wheel 2 and a driven wheel 3, coupled to a drive chain 4. The transmission system 1 can be part of a bicycle, wherein the drive wheel 2 is driven by a user by means of pedals, but this is not shown in the figure for sake of simplicity. It is common practice that the drive wheel 2 then has a larger diameter than the driven wheel 3.

The chain 4 successively comprises a first part 4A extending along a part of the drive wheel 2, a second part 4B extending along a part of the driven wheel 3, a third part 4C extending between the wheels 2 and 3, and a fourth part 4D extending between the wheels 2 and 3. In this example, it is assumed that the axles of the wheels 2 and 3 are situated next to each other in a horizontal plane, and that the third part 4C is located above the fourth part 4D. Hereinafter, the third and fourth chain parts 4C and 4D are also referred to as first and second chain half, respectively.

The wheels 2 and 3 are rotatably mounted to a frame 5, in such a way that in rest there is a bias tension in the chain 4. The tension in the first chain half 4C is referred to as F_{c}, and the tension in the second chain half 4D is referred to as F_{D}.

The transmission system 1 is provided with a measuring system 6, adapted for measuring the forces F_{C} en F_{D} in the chain 4, which are a measure for the torque transmitted by the chain 4. This measuring system 6 comprises a transverse force measuring wheel 10, arranged within the span of the chain 4, substantially in the same plane as the wheels 2 and 3. The diameter thereof is so large that both the first chain half 4C and the second chain half 4D follow a curved trajectory between the wheels 2 and 3, and extend for a part along the periphery of the measuring wheel 10. In a possible embodiment, the measuring wheel 10 has the same diameter as the largest of the wheels 2 and 3, and, in case of a measuring wheel provided with sprockets, the measuring wheel can be equal to the largest of the wheels 2 and 3. A first transverse force F_{DC} is exerted to the measuring wheel 10 by the tension F_{C} in the first chain half 4C, and a second transverse force F_{DD} is exerted to the measuring wheel 10 by the tension F_{D} in the second chain half 4D. These two forces go through the centre of the measuring wheel 10.

The measuring wheel 10 is rotatably mounted to a supporting arm 20, which in turn is fixed with respect to the frame. Preferably, the centre point of the measuring wheel 10 in rest is located on a line L connecting the rotation centre points of the wheels 2 and 3. Fixation of that supporting arm 20 takes place when the system is in rest, i.e. when no drive force is exerted. Then the tensions F_{C} en F_{D} in the two chain halves 4C and 4D are equal to each other, and the resultant F_{DR} of the two transverse forces F_{DC} and F_{DD} lies in the horizontal plane, represented in the figure by said line L. The centre of the measuring wheel 10 is then situated, as said, on said line L. In this situation the supporting arm 20 is fixed to the frame.

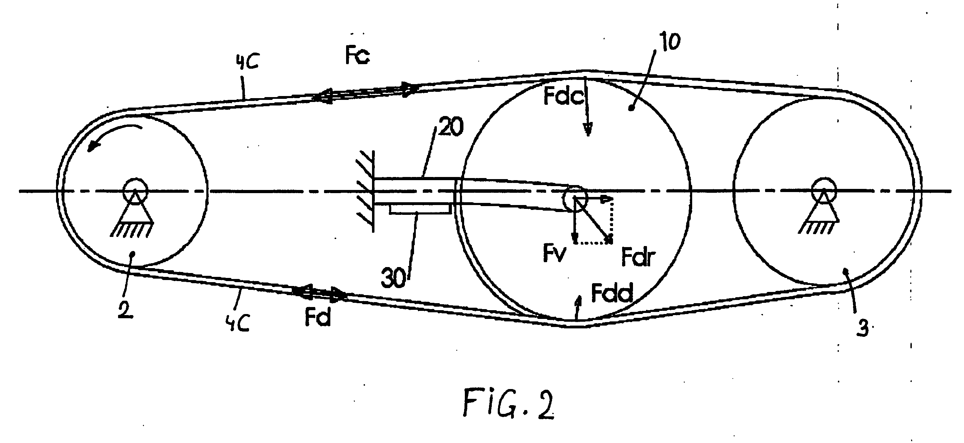

When a drive force is exerted to the drive wheel 2, which is transmitted by the chain 4, the tension in one chain half becomes higher than the tension in the other chain half. Assume that the drive wheel 2 is driven counter clockwise, as indicated in figure 2. The tension F_{C} in the first chain half 4C then becomes higher than the tension F_{D} in the second chain half 4D. Consequently, also the corresponding transverse force F_{DC} becomes larger than F_{DD}, so that the resultant F_{DR} of these two transverse forces gets a component F_{V} directed perpendicular to the horizontal line L, in this case directed downward. Hereby, a bending of the supporting arm 20 occurs. This bending is measurable by a deformation sensor 30 mounted on the supporting arm 20, which can be implemented as a strain gauge or a system of strain gauges, as known per se.

The electric measurement signal S_{M} given by the measuring sensor 30 is a measure for the force exerted, and is supplied to a processor 40 for further processing. In case of a home trainer, this processor 40 can for instance be adapted for calculating the amount of calories consumed.

The rotatable measuring wheel 10 is mounted on the supporting arm 20 by means of a bearing which is not shown for the sake of simplicity. This can be a relatively simple bearing, since the measuring wheel 10 does not experience a large force with respect to the supporting arm 20: this bearing is only loaded by the resultant F_{DR}.

Although it is preferred that the measuring wheel 10 is rotatable, this is not necessary for the operation of the measuring wheel 10 within the scope of the present invention. If the measuring wheel 10 is fixed, and the chain 4 slides over the measuring wheel 10, a force resultant F_{DR} as described above emerges as well.

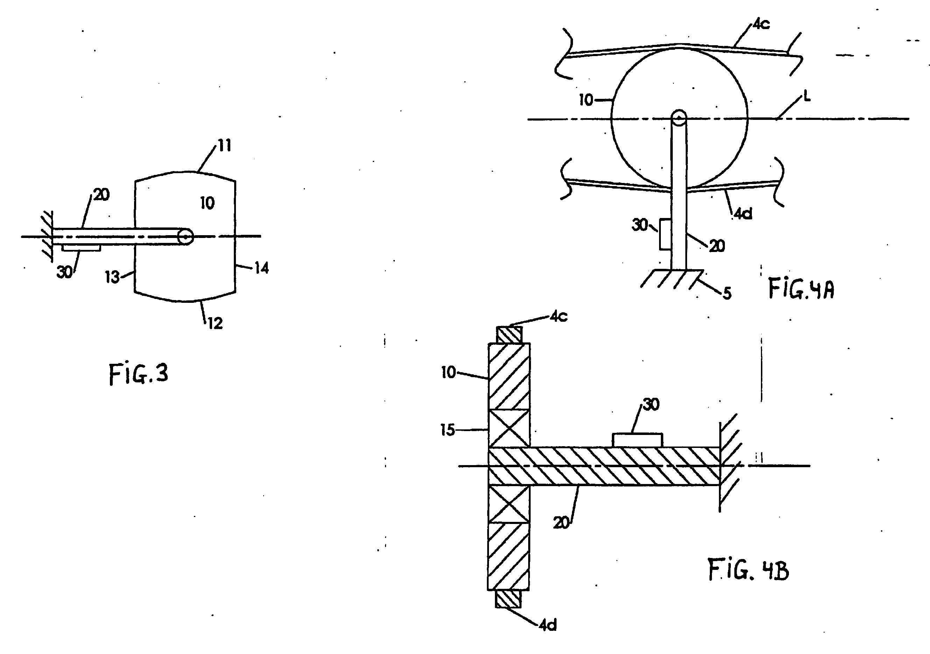

In case of a non-rotatable force sensor 10, it does not need to have a circular outline. The force sensor 10 can then for instance have a four-sided outline, of which two contact faces 11 and 12 situated opposite each other can have a convex shape, for instance the shape of an arc, and of which the other sides 13 and 14 can have an arbitrary shape, for instance a straight shape, as illustrated in figure 3. Instead of a convex shape with constant curvature radius, said contact faces 11 and 12 situated opposite each other may also have a curvature radius varying as function of the location, and they can for instance have the shape of a sinusoid or hyperboloid.

Preferably, the force sensor 10 is made of a material which counteracts sound production, at least that part of the force sensor which comes into contact with the chain is provided with such a layer. An example of a suitable material is synthetic material.

The supporting arm 20 can in principle have an arbitrary direction. In a first embodiment variation, schematically illustrated in figure 4A, the supporting arm 20 is situated in the plane of the chain wheels 2 and 3 and the chain 4, substantially directed horizontally, i.e. perpendicular to the wheel axle connection line L. In that case, the deformation occurring in the supporting arm 20 as a result of the force component F_{V} to be measured will mainly be a change of length, and the deformation sensor 30 needs to be adapted for measuring change of length, as will be clear to a person skilled in the art.

In a second embodiment variation, schematically illustrated in figure 4B, the supporting arm 20 is situated perpendicular to the plane of the chain wheels 2 and 3 and the chain 4. In that case, the deformation occurring in the supporting arm 20 as a result of the force component F_{V} to be measured will mainly be a bending, and the deformation sensor 30 needs to be adapted for measuring bending, as will be clear to a person skilled in the art.

In a third embodiment variation, schematically illustrated in the figures 1 and 2, the supporting arm 20 is situated in the plane of the chain wheels 2 and 3 and the chain 4, substantially directed horizontally, i.e. directed according to the wheel axle connection line L. In that case, the deformation occurring in the supporting arm 20 as a result of the force component F_{V} to be measured will mainly be a bending, and the deformation sensor 30 needs to be adapted for measuring bending, as will be clear to a person skilled in the art.

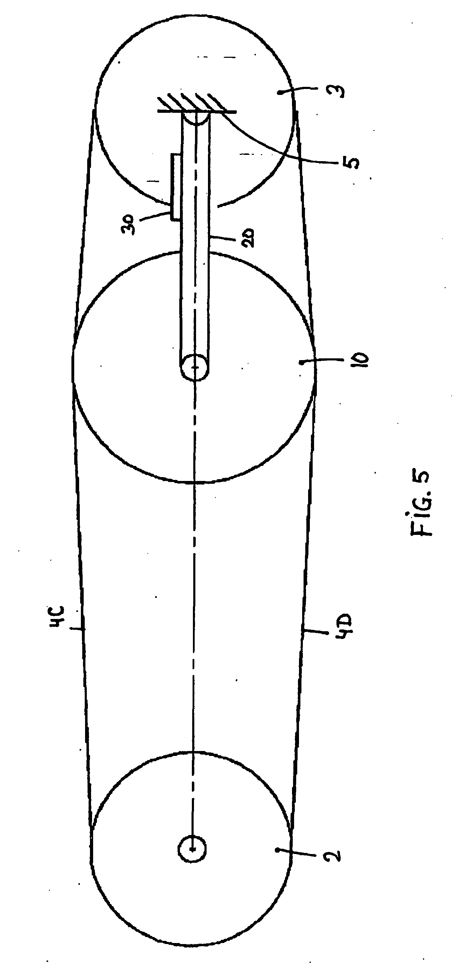

This third embodiment variation is preferred. In this case, it is preferred that the supporting arm 20 is not directly attached to the frame, but to the axle of the driving wheel 2 or the driven wheel 3 fixed with respect to the frame, as schematically illustrated in figure 5. Here, the advantage is achieved that, if the wheel is adjusted with respect to the frame, for instance to tighten the chain, it is not necessary to adjust the mounting of the force sensor 10 as well. Moreover, in this case no extra mounting point is necessary, and the measuring arrangement, when a connection bolt of the wheel is loosened, automatically seeks the position where the bending beam 20 is unloaded.

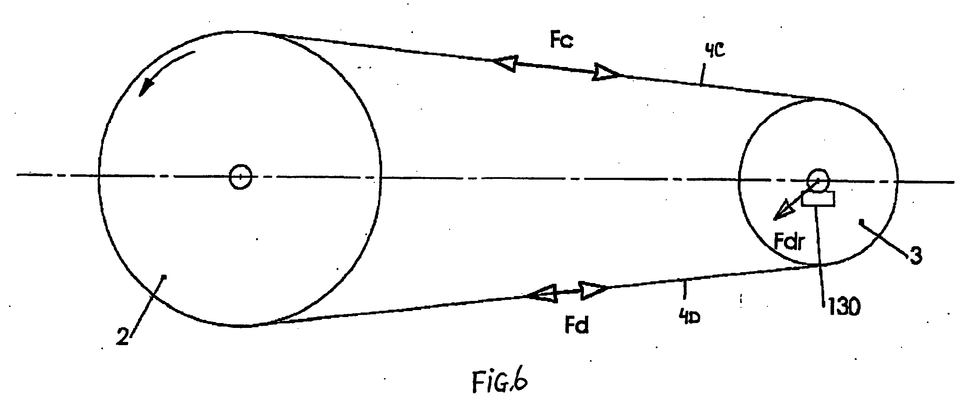

In another embodiment variation of the present invention, schematically illustrated in figure 6, no separate measuring wheel 10 is necessary for measuring the vertical force component Fv if the diameters of the driving wheel 2 and the driven wheel 3 are mutually different. The explanation given in the preceding with respect to the occurrence of a force resultant Fv is also applicable to the driving wheel 2 and the driven wheel 3: also these wheels experience a vertical force component which is a measure for the tension difference. In this case, however, this vertical force component occurs as resultant of the normal forces being exerted by the first chain part 4A and the second chain part 4B, respectively. This force component can be measured with a force sensor 130 associated with the wheel 2 and 3 concerned, which is schematically shown in figure 6 for the driven wheel 3.

For measuring the forces exerted to a wheel, several force sensors have been developed. An example of such a force sensor is described in WO01/30643 and PCT/NL02/00867. Since these known force sensors can all in principle be used for application as force sensor 130, it is not necessary here to give an extensive description of their design and operation.

The known force sensors are intended for measuring the chain force itself, i.e. the tension in the first chain half 4C, based on the thought that there is no tension in the second chain half. Therefore, the known force sensors are mounted in such a way that their sensitivity direction is directed substantially horizontally, at least substantially corresponds with the direction of the first chain half 4D. For application as force sensor 130 within the scope of the present invention the mounting needs to be such, that their sensitivity direction is directed substantially vertically. With respect to the known mounting, this only means a rotation over approximately 90°.

It will be clear to a person skilled in the art that the invention is not limited to the above discussed exemplary embodiments, but that several variations and modifications are possible within the scope of protection of the invention as defined in the attached claims.

For instance, the force sensor 10 can e.g. be provided with a groove in its surface over which the chain runs.

Furthermore, it is possible that the drive wheel 2 and/or the driven wheel 3 are attached to the frame 5 through a supporting arm, in a comparable way as the supporting arm 20 for the measuring wheel 10.

Furthermore, it is possible that a force sensor for measuring the force exerted to the measuring wheel 10 is mounted on the axle of the measuring wheel or in the bearing of the measuring wheel; for such a force sensor, a force sensor as described in WO01/30643 and/or PCT/NL02/00867 can advantageously be applied. In case of mounting on the axle of the measuring wheel, the force sensor can be adapted for measuring the bending of this axle. In case of mounting on the bearing of the measuring wheel, the force sensor -can be adapted for measuring the resulting force exerted to the measuring wheel.

Preferably, the horizontal position of the measuring wheel 10 is adjustable along the said line L. This can for instance offer advantages in case of the measuring wheel 10 being a sprocket wheel, the sprockets of which engaging in the links of the coupling chain 4. Such an adjustability can be attained in a relatively easy way by providing the supporting arm 20 with a somewhat elongated hole (slotted hole), in which an attachment member for the measuring wheel 10 is fastened.

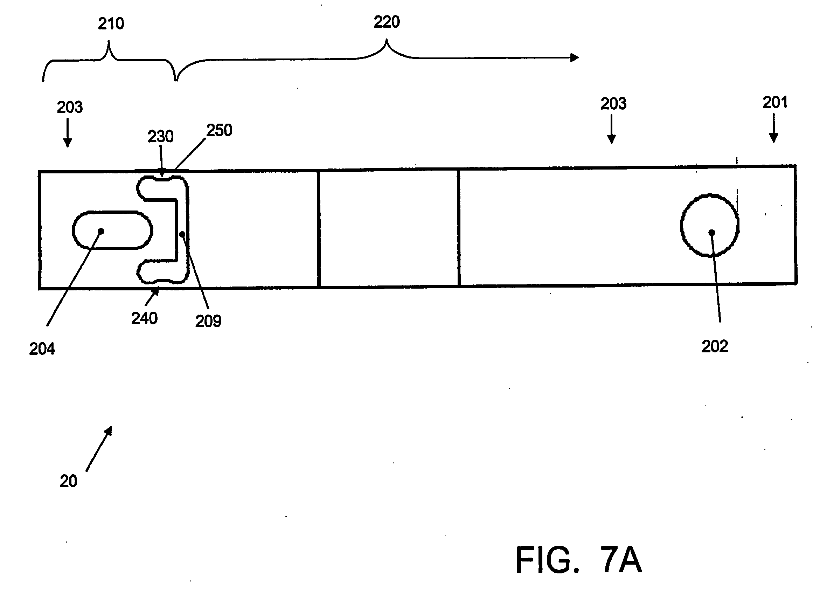

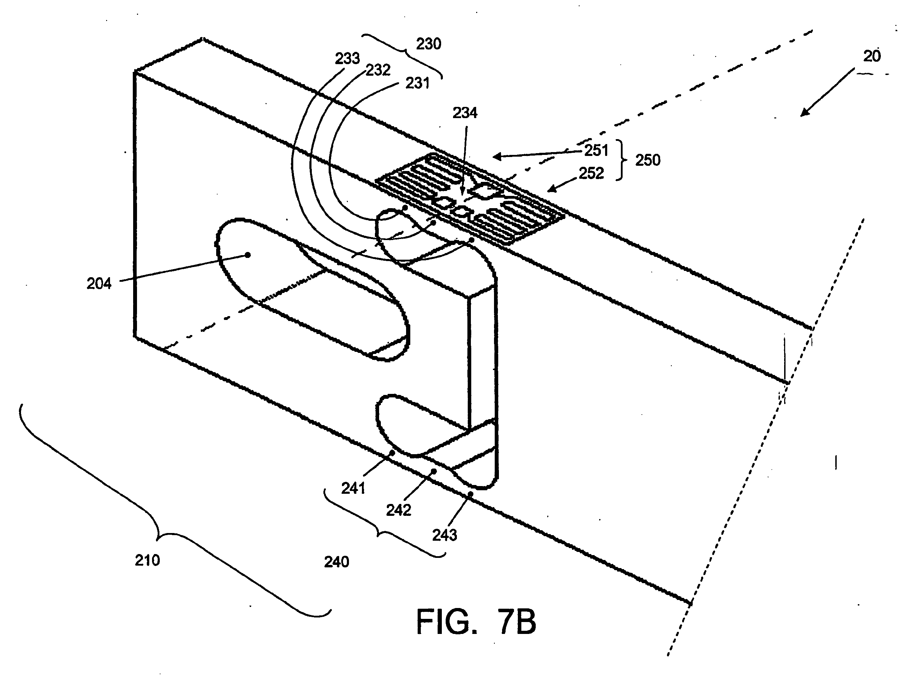

Figure 7A shows a schematic front view of a preferred embodiment of the supporting arm 20, which in general has the shape of a beam with a rectangular cross section, wherein a first mounting hole 202 is arranged at a first end 201 for mounting the supporting arm 20 to a frame or to a bicycle axle or the like, and wherein an elongated mounting hole 204 for the measuring wheel 10 is arranged at a second end 203, the longitudinal direction of said elongated mounting hole 204 substantially overlapping with a centre line of the supporting arm 20. In this preferred embodiment, the supporting arm 20 comprises a cut-away 209 extending over almost the entire width (i.e.: vertical direction) of the arm 20, in this case a cut-away with a substantially U-shaped outline, which divides the arm 20 into a primary arm part 210 which contains the first mounting hole 202 and a secondary arm part 220 which contains the said elongated mounting hole for the measuring wheel 10. The cut-away 209 leaves free two bridge parts 230, 240, which connect the secondary arm part 220 with the primary arm part 210. Each bridge part 230, 240 has, viewed in the longitudinal direction, a first bridge end part 231, 241, a middle bridge part 232, 242, and a second bridge end part 233, 243, wherein the middle bridge part 232, 242 in the illustrated preferred embodiment is a little thicker than the adjoining first and second-bridge end parts. On a side face 234 of one of the bridge parts, in this case bridge part 230, a deformation sensor 250 comprising two strain gauges 251, 252 is mounted, wherein the two strain gauges 251, 252 are ubstantially aligned with said bridge end parts 231 and 233. Figure 7B schematically shows a perspective view hereof. The side face 234 is a face of which the normal direction is substantially directed vertically, i.e. parallel to the direction of the force component F_{V} to be measured.

This design offers the following advantages.

When a transverse force is exerted on the measuring wheel (not shown in the figures 7A and 7B) as discussed above, the secondary arm part 220 will be displaced substantially along a straight line in a direction perpendicular to the longitudinal direction of the supporting arm 20, while the two bridge parts 230, 240 are deformed to an S-shaped outline. The deformation mainly occurs in the thinnest parts of the two bridge parts 230, 240, i.e. the first and second bridge end parts. As a result, one of the strain gauges 251, 252 experiences a lengthening while the other one experiences a shortening, and the signals generated thereby can be processed so that they enhance each other. When the supporting arm is subjected to another deformation, like for instance a lengthening as a result of external load or as a result of temperature variations, the variations in the output signals of the measuring strips cancel each other out.

If a solid supporting arm would be used, which is as a whole loaded for bending, then two measuring strips compensating one another must be attached on surfaces situated opposite each other (top surface and bottom surface) of the supporting arm. This means that operations like surface treatments and attaching strain gauges would then have to be executed twice, against only once in the case of the design proposed by the present invention.

A further advantage is attained in manufacturing the supporting arm itself. In order to be able to be used as measuring arm, the bending-sensitive part of the measuring arm must be manufactured precisely. In the case of a solid supporting arm, bending takes place over a relatively long length, so that the precise manufacturing must be-applied to a large' length part, which is cumbersome and makes the supporting arm relatively expensive. In the case of the supporting arm proposed by the present invention, only a single bridge-part 230 needs to be manufactured-precisely, which is simpler. In a possible embodiment, the elongated hole 204 and the cut-away 209 are manufactured by a single punch treatment.

A further advantage of the supporting arm proposed by the present invention is attained when using it. Because the secondary arm part 220 is substantially displaced along a line in a direction perpendicular to the longitudinal direction of the supporting arm 20, the deformation of the bridge parts, and thereby the sensor signal generated, is substantially independent from the precise location of the axle of the measuring wheel in the elongated hole 204.

It is noted that the number of bridge parts between the primary and secondary arm parts may also be higher than two.

## Claims

1. Transmission system (1), comprising:
a drive wheel (2), a driven wheel (3), and a coupling chain (4) having a first chain half (4C) and a second chain half (4D);
a tension difference measuring device (6) for providing a measurement signal which is representative for the torque transmitted by the coupling chain (4);
said measuring device (6) comprising a transverse force sensor (10; 2; 3), provided with force measuring means (20,30) for providing a measurement signal (S_{M}) which is a measure for the component (F_{V}), directed substantially perpendicular to the plane (L) defined by the rotation axes of the drive wheel (2)
and the driven wheel (3), of the resultant (F_{DR}) of the transverse forces (F_{DC}, F_{DD}) exerted to the transverse force sensor (10; 2; 3) by the chain parts (4C, 4D; 4A; 4B);
**characterized in that** the transverse force sensor (10; 2; 3) is arranged within the span of the coupling chain (4),
between the drive wheel (2) and the driven wheel (3), and has a first contact face (11) touching the inner side of the first chain half (4C) and a second contact face (12) touching the inner side of the second chain half (4D).

2. Transmission system according to claim 1, wherein the transverse force sensor (10) has a circular outline.

3. Transmission system according to claim 2, wherein the transverse force sensor (10) is rotatably mounted.

4. Transmission system according to claim 3, wherein the force measuring means is mounted on an axle of the rotatably mounted transverse force sensor (10), said force measuring means, provided with force measuring means (20,30) preferably comprising a sensor sensitive to bending of the said axle.

5. Transmission system according to claim 4, said force measuring means being sensitive to the resulting force exerted on the transverse force sensor (10).

6. Transmission system according to any of the claims 2-5, wherein the centre point of the transverse force sensor (10) is substantially located in the plane (L) defined by the rotation axes of the drive wheel (2) and the driven wheel (3), and wherein a rotation axis of the transverse force sensor (10) is directed substantially parallel to the rotation axes of the drive wheel (2) and the driven wheel (3).

7. Transmission system according to claim 1, wherein the two contact faces (11, 12) are convex with a varying curvature radius.

8. Transmission system according to claim 1, wherein the two contact faces (11, 12) are convex with a curvature radius which is larger than half the distance between both contact faces.

9. Transmission system according to any of the claims 1-6, wherein said force measuring means is adapted for measuring a displacement of the transverse force sensor (10).

10. Transmission system according to claim 9, wherein said measuring device comprises a supporting arm for the transverse force sensor and said force measuring means comprise a measuring sensor (30) for measuring a deformation of the supporting arm (20).

11. Transmission system according to claim 10, wherein said supporting arm (20) is directed substantially perpendicular with respect to the plane (L) defined by the rotation axes of the drive wheel (2) and the driven wheel (3), and wherein said measuring sensor (30) is adapted for measuring a change in length of the supporting arm (20).

12. Transmission system according to claim 10, wherein said supporting arm (20) is directed substantially perpendicular with respect to the plane defined by the coupling chain (4), and wherein said measuring sensor (30) is adapted for measuring a bending of the supporting arm (20).

13. Transmission system according to claim 10, wherein said supporting arm (20) is directed substantially parallel to the plane (L) defined by the rotation axes of the drive wheel (2) and the driven wheel (3) and is directed substantially parallel to the plane defined by the coupling chain (4), and wherein said measuring sensor (30) is adapted for measuring a bending of the supporting arm (20).

14. Transmission system according to claim 13, wherein said supporting arm (20) is attached to a wheel axle of the drive wheel (2) or of the driven wheel (3).

15. Transmission system according to any of the claims 10-14, wherein the measuring sensor (30) comprises one or more strain gauges.

16. Transmission system according to claim 1, wherein at least the contact faces (11, 12) of the transverse force sensor (10) are manufactured of a sound production counteracting material, wherein the whole transverse force sensor (10) is preferably manufactured of a sound production counteracting material, said material comprising for instance a synthetic material.

17. Transmission system according to claim 1, wherein the measuring means comprises a measuring sensor (130), wherein the transverse force sensor is one of the wheels (2, 3), and wherein the measuring sensor (130) is adapted for measuring the force exerted to the wheel concerned in a direction substantially perpendicular to the plane (L) defined by the rotation axes of the drive wheel (2) and the driven wheel (3).

18. Vehicle, comprising a transmission system (1) according to any of the claims 1-17, which vehicle can be a vehicle driven by human force, particularly a bicycle.

19. Training device, comprising a transmission system (1) according to any of the claims 1-17, which training device can be a bicycle training device, for instance a home trainer or a spinning bike.

20. Method for measuring a drive force being transmitted by a transmission system (1), comprising a drive wheel (2), a driven wheel (3), and a coupling chain (4) having a first chain half (4C) and a second chain half (4D);
said method comprising the steps of:
providing a transverse force sensor (10) having a first contact face (11) and a second contact face (12) ;
measuring the component (F_{V}), directed substantially perpendicular to the plane (L) defined by the rotation axes of the drive wheel (2) and the driven wheel (3), of the resultant (F_{DR}) of the transverse forces (F_{DC}, F_{DD}) exerted to the transverse force sensor (10) by the first chain half (4C) and the second chain half (4D); **characterized in** by
arranging the transverse force sensor (10) between the drive wheel and the driven wheel within the span of the chain (4), in such a way that the first contact face (11) is in force transmitting contact with the first chain half (4C) and that the second contact face (12) is in force transmitting contact with the inner side of the second chain half (4D).

21. Method according to claim 20, wherein said force component (F_{V}) is measured by measuring a displacement of the transverse force sensor (10) caused by said force component (F_{V}).

22. Method according to claim 21, wherein the transverse force sensor (10) is fixed with a supporting arm (20) with respect to the transmission system (1), and wherein said displacement is measured by measuring a deformation of the supporting arm (20) of the transverse force sensor (10) caused by said force component (F_{V}).

23. Method according to claim 21, wherein the transverse force sensor (10) is mounted on an axle, and wherein said displacement is measured by measuring a deformation of said axle of the transverse force sensor (10) caused by said force component (F_{V}).

24. Method according to claim 21, wherein said displacement is measured by measuring a force on a bearing of the transverse force sensor (10) caused by said force component (F_{V}).

## Patentansprüche

1. Übertragungssystem (1), umfassend:
ein Antriebsrad (2), ein angetriebenes Rad (3) und eine Kopplungskette (4) mit einer ersten Kettenhälfte (4C) und einer zweiten Kettenhälfte (4D);
eine Spannungsunterschiedsmessvorrichtung (6) zur Bereitstellung eines Messsignals, welches das durch die Kopplungskette (4) übertragene Drehmoment darstellt;
wobei die Messvorrichtung (6) einen mit einem Kraftmessmittel (20, 30) versehenen Querkraftsensor (10; 2: 3) umfasst, um ein Messsignal (S_{M}) bereitzustellen, das ein Maß für die im Wesentlichen rechtwinkelig zu der durch die Drehachsen des Antriebsrads (2) und des angetriebenen Rads (3) definierten Ebene (L) gerichtete Komponente (F_{V}) der Resultierenden (F_{DR}) der durch die Kettenteile (4C, 4D; 4A; 4B) auf den Querkraftsensor (10; 2;, 3) ausgeübten Querkräfte (F_{DC}, F_{DD}) ist;
**dadurch gekennzeichnet, dass** der Querkraftsensor (10; 2; 3) innerhalb der Spannweite der Kopplungskette (4) zwischen dem Antriebsrad (2) und dem angetriebenen Rad (3) angeordnet ist und eine erste Kontaktfläche (11), die die Innenseite der ersten Kettenhälfte (4C) berührt, und eine zweite Kontaktfläche (12), die die Innenseite der zweiten Kettenhälfte (4D) berührt, aufweist.

2. Übertragungssystem nach Anspruch 1, wobei der Querkraftsensor (10) einen kreisförmigen Umriss aufweist.

3. Übertragungssystem nach Anspruch 2, wobei der Querkraftsensor (10) drehbar angebracht ist.

4. Übertragungssystem nach Anspruch 3, wobei das Kraftmessmittel an einer Achse des drehbar angebrachten Querkraftsensors (10) angebracht ist, wobei das Kraftmessmittel vorzugsweise einen Sensor umfasst, der auf das Biegen der Achse reagiert.

5. Übertragungssystem nach Anspruch 4, wobei das Kraftmessmittel auf die resultierende Kraft, die auf den Querkraftsensor (10) ausgeübt wird, reagiert.

6. Übertragungssystem nach einem der Ansprüche 2 bis 5, wobei sich der Mittelpunkt des Querkraftsensors (10) im Wesentlichen in der durch die Drehachsen des Antriebsrads (2) und des angetriebenen Rads (3) definierten Ebene (L) befindet, und wobei eine Drehachse des Querkraftsensors (10) im Wesentlichen parallel zu den Drehachsen des Antriebsrads (2) und des angetriebenen Rads (3) ausgerichtet ist.

7. Übertragungssystem nach Anspruch 1, wobei die beiden Kontaktflächen (11, 12) konvex mit einem sich verändernden Krümmungsradius sind.

8. Übertragungssystem nach Anspruch 1, wobei die beiden Kontaktflächen (11, 12) konvex mit einem Krümmungsradius sind, der größer als die Hälfte des Abstands zwischen beiden Kontaktflächen ist.

9. Übertragungssystem nach einem der Ansprüche 1 bis 6, wobei das Kraftmessmittel zur Messung einer Verschiebung des Querkraftsensors (10) geeignet ist.

10. Übertragungssystem nach Anspruch 9, wobei das Kraftmessmittel einen Tragearm für den Querkraftsensor umfasst, und das Messmittel einen Messsensor (30) zum Messen einer Verformung des Tragearms (20) umfasst.

11. Übertragungssystem nach Anspruch 10, wobei der Tragearm (20) in Bezug auf die durch die Drehachsen des Antriebsrads (2) und des angetriebenen Rads (3) definierte Ebene (L) im Wesentlichen rechtwinkelig ausgerichtet ist, und wobei der Messsensor (30) zum Messen einer Veränderung der Länge des Tragearms (20) geeignet ist.

12. Übertragungssystem nach Anspruch 10, wobei der Tragearm (20) in Bezug auf die durch die Kopplungskette (4) definierte Ebene im Wesentlichen rechtwinkelig ausgerichtet ist, und wobei der Messsensor (30) zum Messen einer Biegung des Tragearms (20) geeignet ist.

13. Übertragungssystem nach Anspruch 10, wobei der Tragearm (20) in Bezug auf die durch die Drehachsen des Antriebsrads (2) und des angetriebenen Rads (3) definierte Ebene (L) in Wesentlichen parallel ausgerichtet ist und zu der durch die Kopplungskette (4) definierten Ebene im Wesentlichen parallel ausgerichtet ist, und wobei der Messsensor (30) zum Messen einer Biegung des Tragearms (20) geeignet ist.

14. Übertragungssystem nach Anspruch 13, wobei der Tragearm (20) an einer Radachse des Antriebsrads (2) oder des angetriebenen Rads (3) angebracht ist.

15. Übertragungssystem nach einem der Ansprüche 10 bis 14, wobei der Messsensor (30) ein oder mehr Dehnmessstreifen umfasst.

16. Übertragungssystem nach Anspruch 1, wobei zumindest die Kontaktflächen (11, 12) des Querkraftsensors (10) aus einem einer Geräuscherzeugung entgegenwirkenden Material hergestellt sind, wobei vorzugsweise der gesamte Querkraftsensor (10) aus einem einer Geräuscherzeugung entgegenwirkenden Material hergestellt ist, wobei das Material zum Beispiel einen Kunststoff umfasst.

17. Übertragungssystem nach Anspruch 1, wobei das Messmittel einen Messsensor (130) umfasst, wobei der Querkraftsensor eines der Räder (2, 3) ist, und wobei der Messsensor (130) zum Messen jener Kraft geeignet ist, die auf das betroffene Rad in einer Richtung ausgeübt wird, welche im Wesentlichen rechtwinkelig zu der durch die Drehachsen des Antriebsrads (2) und des angetriebenen Rads (3) definierten Ebene (L) verläuft.

18. Fahrzeug, umfassend ein Übertragungssystem (1) nach einem der Ansprüche 1 bis 17, wobei das Fahrzeug ein durch menschliche Kraft angetriebenes Fahrzeug und insbesondere ein Fahrrad sein kann.

19. Trainingsvorrichtung, umfassend ein Übertragungssystem (1) nach einem der Ansprüche 1 bis 17, wobei die Trainingsvorrichtung eine Fahrradtrainingsvorrichtung wie zum Beispiel ein Heimtrainer oder ein Spinning-Fahrrad sein kann.

20. Verfahren zum Messen einer Antriebskraft, die durch ein Übertragungssystem (1), das ein Antriebsrad (2), ein angetriebenes Rad (3) und eine Kopplungskette (4) mit einer ersten Kettenhälfte (4C) und einer zweiten Kettenhälfte (4D) umfasst, übertragen wird;
wobei das Verfahren die folgenden Schritte umfasst:
Bereitstellen eines Querkraftsensors (10) mit einer ersten Kontaktfläche (11) und einer zweiten Kontaktfläche (12);
Messen der im Wesentlichen rechtwinkelig zu der durch die Drehachsen des Antriebsrads (2) und des angetriebenen Rads (3) definierten Ebene (L) gerichteten Komponente (F_{V}) der Resultierenden (FD_{R}) der durch die erste Kettenhälfte (4C) und die zweite Kettenhälfte (4D) auf den Querkraftsensor (10) ausgeübten Querkräfte (F_{DC}, F_{DD});
**gekennzeichnet durch**
Anordnen des Querkraftsensors (10) innerhalb der Spannweite der Kette (4) zwischen dem Antriebsrad und dem angetriebenen Rad in der Weise, dass sich die erste Kontaktfläche (11) in einem kraftübertragenden Kontakt mit der Innenseite der ersten Kettenhälfte (4C) befindet, und dass sich die zweite Kontaktfläche (12) in einem kraftübertragenden Kontakt mit der Innenseite der zweiten Kettenhälfte (4D) befindet.

21. Verfahren nach Anspruch 20, wobei die Kraftkomponente (F_{V}) durch Messen einer durch die Kraftkomponente (F_{V}) verursachten Verschiebung des Querkraftsensors (10) gemessen wird.

22. Verfahren nach Anspruch 21, wobei der Querkraftsensor (10) mit einem Tragearm (20) in Bezug auf das Übertragungssystem (1) fixiert ist, und wobei die Verschiebung durch Messen einer durch die Kraftkomponente (F_{V}) verursachten Verformung des Tragearms (20) des Querkraftsensors (10) gemessen wird.

23. Verfahren nach Anspruch 21, wobei der Querkraftsensor (10) an einer Achse angebracht ist, und wobei die Verschiebung durch Messen einer durch die Kraftkomponente (F_{V}) verursachten Verformung der Achse des Querkraftsensors (10) gemessen wird.

24. Verfahren nach Anspruch 21, wobei die Verschiebung durch Messen einer durch die Kraftkomponente (F_{V}) verursachten Kraft auf ein Lager des Querkraftsensors (10) gemessen wird.

## Revendications

1. Système de transmission (1) comprenant :
une roue d'entraînement (2), une roue menée (3) et une chaîne de couplage (4) ayant une première moitié de chaîne (4C) et une deuxième moitié de chaîne (4D) ;
un dispositif de mesure de différence de tension (6) pour fournir un signal de mesure qui est représentatif du couple transmis par la chaîne de couplage (4) ;
ledit dispositif de mesure (6) comprenant un capteur de force transversale (10 ; 2 ; 3), pourvu d'un moyen de mesure de force (20, 30) pour fournir un signal de mesure (S_{M}) qui est une mesure de la composante (F_{V}), dirigée substantiellement perpendiculairement au plan (L) défini par les axes de rotation de la roue d'entraînement (2) et de la roue menée (3), de la résultante (F_{DR}) des forces transversales (F_{DC}, F_{DD}) exercées sur le capteur de force transversale (10 ; 2 ; 3) par les parties de chaîne (4C, 4D ; 4A ; 4B) ;
**caractérisé en ce que** le capteur de force transversale (10 ; 2 ; 3) est placé dans l'intervalle d'un brin de la chaîne de couplage (4), entre la roue d'entraînement (2) et la roue menée (3), et a une première face de contact (11) qui touche le côté intérieur de la première moitié de chaîne (4C) et une deuxième face de contact (12) qui touche le côté intérieur de la deuxième moitié de chaîne (4D).

2. Système de transmission selon la revendication 1, dans lequel le capteur de force transversale (10) a un contour circulaire.

3. Système de transmission selon la revendication 2, dans lequel le capteur de force transversale (10) est monté de façon rotative.

4. Système de transmission selon la revendication 3, dans lequel le moyen de mesure de force est monté sur un axe du capteur de force transversale (10) monté de façon rotative, ledit moyen de mesure de force comprenant de préférence un capteur sensible à la flexion dudit axe.

5. Système de transmission selon la revendication 4, ledit moyen de mesure de force étant sensible à la force résultante exercée sur le capteur de force transversale (10).

6. Système de transmission selon l'une quelconque des revendications 2 à 5, dans lequel le point central du capteur de force transversale (10) est substantiellement situé dans le plan (L) défini par les axes de rotation de la roue d'entraînement (2) et de la roue menée (3), et dans lequel un axe de rotation du capteur de force transversale (10) est dirigé substantiellement parallèlement aux axes de rotation de la roue d'entraînement (2) et de la roue menée (3).

7. Système de transmission selon la revendication 1, dans lequel les deux faces de contact (11, 12) sont convexes avec un rayon de courbure variable.

8. Système de transmission selon la revendication 1, dans lequel les deux faces de contact (11, 12) sont convexes avec un rayon de courbure qui est supérieur à la moitié de la distance entre les deux faces de contact.

9. Système de transmission selon l'une quelconque des revendications 1 à 6, dans lequel ledit moyen de mesure de force est adapté pour mesurer un déplacement du capteur de force transversale (10).

10. Système de transmission selon la revendication 9, dans lequel ledit dispositif de mesure comprend un bas de support pour le capteur de force transversale et ledit moyen de mesure de force comprend un capteur de mesure (30) pour mesurer une déformation du bras de support (20).

11. Système de transmission selon la revendication 10, dans lequel ledit bras de support (20) est dirigé substantiellement perpendiculairement par rapport au plan (L) défini par les axes de rotation de la roue d'entraînement (2) et de la roue menée (3), et dans lequel ledit capteur de mesure (30) est adapté pour mesurer un changement de la longueur du bras de support (20).

12. Système de transmission selon la revendication 10, dans lequel ledit bras de support (20) est dirigé substantiellement perpendiculairement par rapport au plan défini par la chaîne de couplage (4), et dans lequel ledit capteur de mesure (30) est adapté pour mesurer une flexion du bras de support (20).

13. Système de transmission selon la revendication 10, dans lequel ledit bras de support (20) est dirigé substantiellement parallèlement au plan (L) défini par les axes de rotation de la roue d'entraînement (2) et de la roue menée (3), et est dirigé substantiellement parallèlement au plan défini par la chaîne de couplage (4), et dans lequel ledit capteur de mesure (30) est adapté pour mesurer une flexion du bras de support (20).

14. Système de transmission selon la revendication 13, dans lequel ledit bras de support (20) est fixé à un axe de roue de la roue d'entraînement (2) et de la roue menée (3).

15. Système de transmission selon l'une quelconque des revendications 10 à 14, dans lequel le capteur de mesure (30) comprend un ou plusieurs extensomètres.

16. Système de transmission selon la revendication 1, dans lequel au moins les faces de contact (11, 12) du capteur de force transversale (10) sont fabriquées à partir d'un matériau limitant la production de bruit, dans lequel le capteur de force transversale (10) entier est de préférence fabriquée à partir d'un matériau limitant la production de bruit, ledit matériau comprenant par exemple un matériau synthétique.

17. Système de transmission selon la revendication 1, dans lequel le moyen de mesure comprend un capteur de mesure (130), dans lequel le capteur de force transversale est l'une des roues (2, 3), et dans lequel le capteur de mesure (130) est adapté pour mesurer la force exercée sur la roue concernée dans une direction substantiellement perpendiculaire au plan (L) défini par les axes de rotation de la roue d'entraînement (2) et de la roue menée (3).

18. Véhicule comprenant un système de transmission (1) selon l'une quelconque des revendications 1 à 17, lequel véhicule peut être un véhicule entraîné par la force humaine, en particulier une bicyclette.

19. Dispositif d'entraînement, comprenant un système de transmission (1) selon l'une quelconque des revendications 1 à 17, lequel dispositif d'entraînement peut être un dispositif d'entraînement cycliste, par exemple un appareil d'entraînement cycliste ou une bicyclette d'intérieur.

20. Procédé de mesure d'une force d'entraînement transmise par un système de transmission (1), comprenant une roue d'entraînement (2), une roue menée (3) et une chaîne de couplage (4) ayant une première moitié de chaîne (4C) et une deuxième moitié de chaîne (4D) ;
ledit procédé comprenant les étapes suivantes :
fournir un capteur de force transversale (10) ayant une première face de contact (11) et une deuxième face de contact (12) ;
mesurer la composante (F_{V}), dirigée substantiellement perpendiculairement au plan (L) défini par les axes de rotation de la roue d'entraînement (2) et de la roue menée (3), de la résultante (F_{DR}) des forces transversales (F_{DC}, F_{DD}) exercées sur le capteur de force transversale (10) par la première moitié de chaîne (4C) et la deuxième moitié de chaîne (4D) ;
**caractérisé par** le fait de mettre en place le capteur de force transversale (10) entre la roue d'entraînement (2) et la roue menée (3), dans l'intervalle d'un brin de la chaîne de couplage (4), de telle manière que la première face de contact (11) est en contact de transmission de force avec le côté intérieur de la première moitié de chaîne (4C) et en ce que la deuxième face de contact (12) est en contact de transmission de force avec le côté intérieur de la deuxième moitié de chaîne (4D).

21. Procédé selon la revendication 20, dans lequel ladite composante de force (Fv) est mesurée en mesurant un déplacement du capteur de force transversale (10) provoqué par ladite composante de force (F_{V}).

22. Procédé selon la revendication 21, dans lequel le capteur de force transversale (10) est fixé avec un bras de support (20) par rapport au système de transmission (1), et dans lequel ledit déplacement est mesuré en mesurant une déformation du bras de support (20) du capteur de force transversale (10) provoquée par ladite composante de force (F_{V}).

23. Procédé selon la revendication 21, dans lequel le capteur de force transversale (10) est monté sur un axe, et dans lequel ledit déplacement est mesuré en mesurant une déformation dudit axe du capteur de force transversale (10) provoquée par ladite composante de force (F_{V}).

24. Procédé selon la revendication 21, dans lequel ledit déplacement est mesuré en mesurant une force exercée sur un roulement du capteur de force transversale (10) provoquée par ladite composante de force (F_{V}).
